(19) Europäisches Patentamt
European Patent Office
Office européen des brevets

(11) Publication number: **0 245 554 A2**

(12) **EUROPEAN PATENT APPLICATION**

(21) Application number: 86305669.3

(22) Date of filing: 23.07.86

(51) Int. Cl.[3]: C 08 F 220/44
C 08 F 232/08
//(C08F220/44, 232:08, 220:14, 212:02), (C08F232/08, 220:44, 220:14, 212:02)

(30) Priority: 05.05.86 US 859522

(43) Date of publication of application: 19.11.87 Bulletin 87/47

(84) Designated Contracting States: BE DE FR GB IT NL SE

(71) Applicant: THE STANDARD OIL COMPANY
200 Public Square, 36-F-3454
Cleveland Ohio 44114-2375(US)

(72) Inventor: Wu, Muyen Michael
155 Sunset Dr.
Hudson Ohio 44236(US)

(72) Inventor: Dewitt, Elmer John
3154 Prior Drive
Cuyahoga Falls Ohio 44223(US)

(72) Inventor: Li, George S.
5095 Boulder
Solon Ohio 44139(US)

(74) Representative: Smith, Sydney et al,
Elkington and Fife High Holborn House 52/54 High Holborn
London WC1V 6SH(GB)

(54) **Terpolymers contaning indene.**

(57) A composition comprising an addition terpolymer containing acrylonitrile, indene and a third monomer selected from methyl methacrylate or at least one monomer of the group α-methylstyrene and vinyl aromatics of the formula:

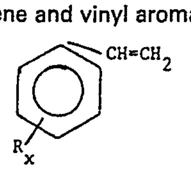

where each R is independently selected from Cl, H and a $C_1$ to $C_9$ alkyl group and x = 1 or 2, combined in the polymer structure such that

(1) when the third monomer is methyl methacrylate, the polymer contains in weight percent 2-35 acrylonitrile, 10-67 indene, 5-85 methyl methacrylate, and the moles of acrylonitrile plus methyl methacrylate are equal to or more than the moles of indene,

(2) when the third monomer is one of both of α-methylstyrene and said vinyl aromatics, the polymer contains in weight percent 10-40 acrylonitrile, 26-67 indene and 4-50 of said third monomer, and the moles of acrylonitrile plus said vinyl aromatics is equal to or greater than the moles of α-methylstyrene plus indene.

EP 0 245 554 A2

Croydon Printing Company Ltd.

# TERPOLYMERS CONTAINING INDENE

This invention relates to novel low viscosity terpolymers containing indene.

It is an object of the present invention to provide new terpolymers of acrylonitrile, indene and a third monomer.

Other objects, as well as aspects, features and advantages, of the present invention will become apparent from a study of the specification, including the examples and the claims.

According to the present invention there are provided normally solid, terpolymers that are the result of addition polymerization of the monomers acrylonitrile, indene and a third monomer.

The terpolymers used in the blends of the present invention are polymers that are the result of addition polymerization of the monomers acrylonitrile and indene with a third monomer, which is methyl methacrylate, or is at least one monomer of the group α-methylstyrene and vinyl aromatics of the formula

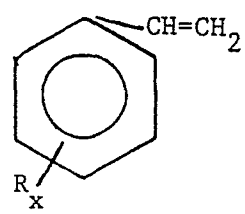

where each R is independently selected from Cl, H and a $C_1$ to $C_9$ alkyl group and x = 1 or 2. These terpolymers usually have a relatively low inherent viscosity. This low viscosity is itself an advantage in making blends.

As used herein inherent viscosity is in deciliters per gram of polymer composition.

According to the present invention there is provided a composition comprising addition terpolymer containing

acrylonitrile, indene and a third monomer selected from methyl methacrylate or at least one monomer of the group α-methylstyrene and vinyl aromatics of the formula:

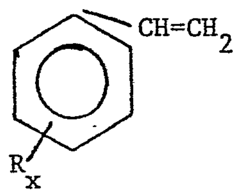

where each R is independently selected from Cl, H and a $C_1$ to $C_9$, usually $C_1$ to $C_2$, alkyl group, and x = 1 or 2, combined in the polymer structure such that

(1) when the third monomer is methyl methacrylate, the polymer contains in weight percent 2-35 acrylonitrile, 10-67 indene, 5-85 methyl methacrylate, and the moles of acrylonitrile plus methyl methacrylate are equal to or more than the moles of indene,

(2) when the third monomer is at least one of α-methylstyrene and said vinyl aromatics of the polymer contains in weight percent 10-40 acrylonitrile, 26-67 indene and 4-50 of said third monomer, and the moles of acrylonitrile plus said vinyl aromatics is equal to or greater than the moles of α-methylstyrene plus indene.

In our compositions, a particularly useful group of said vinyl aromatic monomers of the formula set forth above are styrene, o-chlorostyrene, p-chlorostyrene, o-ethylstyrene, p-ethylstyrene, o-tert.-butylstyrene, p-tert.-butylstyrene, o-methylstyrene, m-methylstyrene, p-methylstyrene, m-tert.-butylstyrene, m-ethylstyrene and o,p-dichlorostyrene.

In particular, styrene is an especially useful and often preferred vinyl aromatic monomer of said formula used to make polymers used in the vinyl chloride polymer blends of the invention. Thus, in the embodiment of the invention there is provided a composition comprising an addition terpolymer containing acrylonitrile, indene and a third monomer selected from methyl methacrylate or one or both of styrene and α-methylstyrene, combined in the polymer structure such that, (1) when the third monomer is methyl methacrylate, the polymer contains in weight percent 2-35 acrylonitrile, 10-67 indene, 5-85

methyl methacrylate, and the moles of acrylonitrile plus methyl methacrylate are equal to or more than the moles of indene, (2) when the third monomer is one or both of α-methylstyrene and styrene, the polymer contains in weight percent 10-40 acrylonitrile, 26-67 indene, 4-50 of the third monomer α-methylstyrene and/or styrene, and the moles of acrylonitrile plus styrene are equal to or greater than the moles of α-methylstyrene plus indene. When the third monomer is α-methylstyrene above, this last limitation requires at least 31 weight percent acrylonitrile combined in the polymer structure.

Moreover, the foregoing compositions that contain at least 30 weight percent indene are usually preferred, especially for use in blends with vinyl chloride polymers.

In the foregoing compositions of this embodiment of the invention the usual composition ranges for particular terpolymers in weight percent are as follows:

1. for an acrylonitrile, methyl methacrylate, indene terpolymer:

| | |
|---|---|
| Acrylonitrile | 2 - 35 |
| Methyl methacrylate | 5 - 85 |
| Indene | 10 - 67 |

2. for an acrylonitrile, α-methylstyrene, indene terpolymer:

| | |
|---|---|
| Acrylonitrile | 31 - 40 |
| α-Methylstyrene | 4 - 64 |
| Indene | 26 - 65 |

3. for an acrylonitrile, styrene, indene terpolymer:

| | |
|---|---|
| Acrylonitrile | 10 - 40 |
| Styrene | 4 - 50 |
| Indene | 26 - 67 |

In the terpolymer compositions of our invention, we have found that the indene and the α-methylstyrene and/or styrene are the main components increasing the HDT, while the polar compounds, acrylonitrile and methyl methylacrylate, contribute to compatibility with the vinyl chloride polymer, thus helping to maintain other physical mechanical properties.

Polymer compositions of the invention that contain at least 25 weight percent combined indene in their structure have the added advantage that they have a low inherent viscosity and their blends with vinyl chloride polymers have improved processability because of the resulting higher melt index.

The terpolymers of the invention, including the examples shown herein, all have inherent viscosities of at least 0.08 deciliters per gram of polymer.

Inherent viscosities in this application (including the claims) are always expressed in deciliters per gram, measured at 25$^{o}$C, using 0.2 grams of the polymer in 100 cc of dimethylformamide for the terpolymers, and in the case of the PVC, using 0.2 grams of the PVC in 100 cc of cyclohexanone.

The terpolymers of the invention are all useful in a number of applications: as extenders for butadiene-acrylonitrile copolymer rubbers of commerce; as hot melt adhesives for general purposes but especially for adhering to acrylonitrile copolymer plastics to themselves as processing aids for poly(vinyl chloride) resins, when used in amounts of, for instance 1-5 weight percent of the PVC; and as a potting compound or an encapsulating medium for various electric or electronic components and the like. The terpolymers are all especially useful when compounded with PVC in amounts of 20-35 weight percent. Such compositions or blends have increased heat distortion temperatures compared to the same unblended PVC, while retaining the generally good PVC physical properties. This utility of the present terpolymers in PVC blends is illustrated in several specific examples herein.

The new polymers of the invention are all useful in particular form as pigments in paint. They can be used, for instance, in the following paint formula:

| Ingredient | Lbs. |
|---|---|
| Terpolymer | 100 |
| Titanium dioxide | 110 |
| Zinc oxide | 25 |
| Long-oil soya alkyd resin (60% nonvolatile) | 480 |
| Mineral spirits | 181 |
| Cobalt naphthenate (6% Co) | 3 |
| Lead naphthenate (24% Pb) | 3 |
| Calcium naphthenate (4% Ca) | 2 |

We are aware of a number of U.S. patents that disclose copolymers and terpolymers that contain both indene and acrylonitrile:

| | |
|---|---|
| 3,926,817 | 4,077,947 |
| 3,926,926 | 4,082,819 |
| 3,947,527 | 4,091,199 |
| 3,950,454 | 4,107,237 |
| 3,997,709 | 4,121,807 |
| 4,020,128 | 4,136,246 |
| 4,074,037 | 4,153,648 |
| 4,074,038 | 4,195,135 |

Most of these polymers, however, have 50 percent or more acrylonitrile. None of the patents disclose low inherent viscosity polymers. One of these, U.S. Patent 4,074,038, discloses terpolymers containing acrylonitrile, styrene or α-methyl styrene and indene, while U.S. Patent 3,926,871 discloses terpolymers containing acrylonitrile, methyl methacrylate and indene, but neither discloses the presently claimed compositions.

Properties reported in this application were determined by the procedures of the following ASTM designations:

| | |
|---|---|
| Heat Distortion Temperature | ASTM D 648(264 psi, unannealed) |
| Tensile Strength | ASTM D(Modified) |
| Flexural Strength | ASTM D 790 |
| Flexural Modulus | ASTM D 790 |
| Melt Index | ASTM D 1238 |

The following examples illustrate the compositions of the invention, how to make them, and their usefulness in PVC blends, but they are not to be considered as limiting.

In the examples unless otherwise stated, the PVC used in the blends was an injection grade PVC having an inherent viscosity of 0.68 deciliters/gm. for a 0.5 weight percent

solution in cyclohexanone, and when stabilized with 3 parts by weight of Thermolite 813 per 100 parts of PVC, the PVC had a tensile strength of 8,500 psi, an HDT of 70°C, a flexural strength of 12,400 psi, a flexural modulus of 430,000 psi, a notched Izod of 0.26 ft-lbs/sq. in., and a melt index of 0.6 grams/10 minutes.

In the examples, Thermolite 813 is di-n-octyltin maleate polymer sold by M & T Chemicals Inc. having the formula

$$\left[(C_8H_{17})_2SnCH_2O_4\right]_n$$

having a melting point of 90°C and specific gravity of 0.6. It is a commonly used thermal stabilizer.

In the following examples 1-5 the poly(vinyl chloride) used was a commercial extrusion grade PVC having an inherent viscosity of 0.93 deciliters/gram for 0.2 weight percent solution to cyclohexanone measured at 25°C. When compounded with 3 parts of Thermolite 813 per 100 weight parts of PVC, the stabilized PVC had an HDT of 72°C, a tensile strength of 10,000 psi, a flexural strength of 13,700 psi and a flexural modulus of 460,000 psi. Its melt index was to low to measure.

EXAMPLE 1

A terpolymer was made by suspension polymerization according to the following recipe. Amounts are in weight parts per 100 parts of total monomers

| PHM | Components |
|---|---|
| 150 | $H_2O$ |
| 0.6 | 2,2'-azobis(2,4-dimethylvaleronitrile) |
| 0.2 | hydroxylethylcellulose (suspending agent) |
| 26.5 | Acrylonitrile |
| 5 | Methyl Methacrylate |
| 68.5 | Indene |

150 parts by weight of distilled water, 0.2 parts of HEC (which had been dissolved in water), 0.2 parts of 2,2'-azobis(2,4-dimethylvaleronitrile), 26.5 of Acrylonitrile, and 68.5 parts of indene were charged into reactor provided with a stirrer. The reactor was purged with nitrogen, and was kept under nitrogen pressure, The temperature of the reactor was held for 5 minutes at 72°C with stirring; then a monomer mixture comprising 0.4 parts of 2,2'-azobis(2,4-dimethylvaleronitrile) and 5 parts of methyl methacrylate was added continually into the reactor over a period of 7.0 hours through a syringe pump. The resulting mixture was further allowed to react for 2 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 28.6 percent yield. The composition of the polymer in wt. percent was 28 acrylonitrile, 6 methyl methacrylate and 66 indene as determined by $C^{13}$ NMR and nitrogen analysis.

25 parts by weight of the terpolymer was mixed with 75 parts of extrusion grade PVC and 3 parts Thermolite 813 as thermostabilizer. The mixture was kneaded for 5 minutes with a mixing brabender having a surface temperature of 190°C. The resulting blend was press formed at 190°C into a sheet, then a plaque. The resin plaque thus prepared was tested for HDT which was 72.5°C.

EXAMPLE 2

A terpolymer was made by suspension polymerization according to the following recipe. Amounts are in weight parts per 100 parts of total monomers

| PHM | Components |
|---|---|
| 150 | $H_2O$ |
| 0.6 | 2,2′-azobis(2,4-dimethylvaleronitrile) |
| 0.2 | hydroxylethylcellulose (suspending agent) |
| 21.5 | Acrylonitrile |
| 10 | Methyl Methacrylate |
| 68.5 | Indene |

150 parts by weight of distilled water, 0.2 parts of HEC (which had been dissolved in water), 0.2 parts of 2,2′-azobis(2,4-dimethylvaleronitrile), 21.5 of Acrylonitrile, 5 parts of methyl methacrylate and 68.5 parts of indene were charged into reactor provided with a stirrer. The reactor was purged with nitrogen, and was kept under nitrogen pressure, The temperature of the reactor was held for 5 minutes at 72°C with stirring; then a monomer mixture comprising 0.4 parts of 2,2′-azobis(2,4-dimethylvaleronitrile) and 5 parts of methyl methacrylate was added continually into the reactor over a period of 7.0 hours through a syringe pump. The resulting mixture was further allowed to react for 2 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 22.2 percent yield. The composition of the polymer in wt. percent was 25 acrylonitrile, 10 methyl methacrylate and 65 indene as determined by $C^{13}$ NMR.

25 parts by weight of the terpolymer was mixed with 75 parts of extrusion grade PVC and 3 parts Thermolite 813 as thermostabilizer. The mixture was kneaded for 5 minutes with a mixing brabender having a surface temperature of 190°C. The resulting blend was press formed at 190°C into a sheet, then a plaque. The resin plaque thus prepared was tested for HDT which was 75.0°C.

EXAMPLE 3

A terpolymer was made by suspension polymerization according to the following recipe. Amounts are in weight parts per 100 parts of total monomers

| PHM | Components |
|---|---|
| 150 | $H_2O$ |
| 0.6 | 2,2'-azobis(2,4-dimethylvaleronitrile) |
| 0.2 | hydroxylethylcellulose (suspending agent) |
| 30 | Acrylonitrile |
| 20 | Methyl Methacrylate |
| 50 | Indene |

150 parts by weight of distilled water, 0.2 parts of HEC (which had been dissolved in water), 0.2 parts of 2,2'-azobis(2,4-dimethylvaleronitrile), 30 parts of Acrylonitrile, 10 parts of methyl methacrylate and 50 parts of indene were charged into reactor provided with a stirrer. The reactor was purged with nitrogen, and was kept under nitrogen pressure, The temperature of the reactor was held for 5 minutes at 76°C with stirring; then a monomer mixture comprising 0.4 parts of 2,2'-azobis(2,4-dimethylvaleronitrile) and 10 parts of methyl methacrylate was added continually into the reactor over a period of 7.0 hours through a syringe pump. The resulting mixture was further allowed to react for 2.0 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 27.8 percent yield. The composition of the polymer in wt. percent was 30 acrylonitrile, 24 methyl methacrylate and 46 indene as determined by $C^{13}$ NMR and nitrogen analysis.

25 parts by weight of the terpolymer was mixed with 75 parts of extrusion grade PVC and 3 parts Thermolite 813 as thermostabilizer. The mixture was kneaded for 5 minutes with a mixing brabender having a surface temperature of 190°C. The resulting blend was press formed at 190°C into a sheet, then a

plaque. The resin plaque thus prepared was tested for HDT which was 76.5°C.

EXAMPLE 4

A terpolymer was made by suspension polymerization according to the following recipe. Amounts are in weight parts per 100 parts of total monomers

| PHM | Components |
|---|---|
| 150 | $H_2O$ |
| 0.6 | 2,2'-azobis(2,4-dimethylvaleronitrile) |
| 0.2 | hydroxylethylcellulose (suspending agent) |
| 25 | Acrylonitrile |
| 20 | Methyl Methacrylate |
| 50 | Indene |

150 parts by weight of distilled water, 0.2 parts of HEC (which had been dissolved in water), 0.2 parts of 2,2'-azobis(2,4-dimethylvaleronitrile), 25 parts of Acrylonitrile, 10 parts of methyl methacrylate and 55 parts of indene were charged into reactor provided with a stirrer. The reactor was purged with nitrogen, and was kept under nitrogen pressure, The temperature of the reactor was held for 5 minutes at 65°C with stirring; then a monomer mixture comprising 0.4 parts of 2,2'-azobis(2,4-dimethylvaleronitrile) and 10 parts of methyl methacrylate was added continually into the reactor over a period of 7.0 hours through a syringe pump. The resulting mixture was further allowed to react for 2.0 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 25.7 percent yield. The composition of the polymer in wt. percent was 27.7 acrylonitrile, 23.0 methyl methacrylate and 49.3 indene as determined by $C^{13}$ NMR and nitrogen analysis.

25 parts by weight of the terpolymer was mixed with 75 parts of extrusion grade PVC and 3 parts Thermolite 813 as thermostabilizer and 1 part of oxidized ethylene homopolymer as lubricant by a blender. The mixture was kneaded for 5 minutes

with a mixing brabender having a surface temperature of 190°C. The resulting blend was press formed at 190°C into a sheet, then a plaque. The resin plaque thus prepared was tested for HDT which was 77°C.

EXAMPLE 5

A terpolymer was made by suspension polymerization according to the following recipe. Amounts are in weight parts per 100 parts of total monomers

| PHM | Components |
|---|---|
| 150 | $H_2O$ |
| 0.6 | 2,2'-azobis(2,4-dimethylvaleronitrile) |
| 0.2 | hydroxylethylcellulose (suspending agent) |
| 30 | Acrylonitrile |
| 20 | Methyl Methacrylate |
| 50 | Indene |

150 parts by weight of distilled water, 0.2 parts of HEC (which had been dissolved in water), 0.2 parts of 2,2'-azobis(2,4-dimethylvaleronitrile), 30 parts of acrylonitrile, 10 parts of methyl methacrylate and 50 parts of indene were charged into reactor provided with a stirrer. The reactor was purged with nitrogen, and was kept under nitrogen pressure, The temperature of the reactor was held for 5 minutes at 65°C with stirring; then a monomer comprising 0.4 parts of 2,2'-azobis(2,4-dimethylvaleronitrile), 5 parts of methyl methacrylate was added continually into the reactor over a period of 12 hours through a syringe pump. The resulting mixture was further allowed to react for 6 more hours. After completion of the reaction, the polymer obtained was dissolved into acetone, and reprecipitated in excess methanol. The polymer was filtered, and dried in a vacuum oven for 24 hours at 60°C. The composition of the terpolymer was 30 acrylonitrile, 25 methyl methacrylate and 45 indene as determined by $C^{13}$ NMR and nitrogen analysis.

25 parts by weight of the terpolymer was mixed with 75 parts of extrusion grade PVC and 3 parts of the diisooctyl ester of di-n-butyltin dimercaptoacetic acid as thermostabilizer and 1 part of oxidized ethylene homopolymer as lubricant by a blender.

The mixture was kneaded for 5 minutes with a mixing brabender having a surface temperature of 190°C. The resulting blend was press formed at 190°C into a sheet, then a plaque. Each resin plaque thus prepared was tested for HDT, tensile strength and other physical properties.

The HDT was 78.5, the tensile strength was 9.800 psi, the flexural strength was 14,300 psi and the flexural modulus 500,000 psi.

## EXAMPLE 6

A terpolymer was made by suspension polymerization according to the following recipe. Amounts are in weight parts per 100 parts of total monomers

| PHM | Components |
|---|---|
| 200 | $H_2O$ |
| 0.6 | 2,2′-azobis(2,4-dimethylvaleronitrile) |
| 0.2 | hydroxylethylcellulose (suspending agent) |
| 20 | Acrylonitrile |
| 30 | Methyl Methacrylate |
| 50 | Indene |

200 parts by weight of distilled water, 0.2 parts of HEC (which had been dissolved in part of the water), 0.2 parts of 2,2′-azobis(2,4-dimethylvaleronitrile), 20 parts of Acrylonitrile, 5 parts of methyl methacrylate, and 50 parts of indene were charged into reactor provided with a stirrer. The reactor was purged with nitrogen, and was kept under nitrogen pressure, The temperature of the reactor was held for 5 minutes at 65°C with stirring; then a monomer mixture comprising 0.4 parts of 2,2′-azobis(2,4-dimethylvaleronitrile) and 25 parts of methyl methacrylate was added continually into the reactor over a period of about 13 hours through a syringe pump. The resulting mixture was further allowed to react for 3 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 34% yield. The composition

of the polymer in wt. percent was 23.8 acrylonitrile, 33.2 methyl methacrylate and 43 indene as determined by $C^{13}$ NMR and nitrogen analysis.

25 parts by weight of the terpolymer was mixed with 75 parts of injection grade PVC and 3 parts Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT and other physical properties.

The HDT was 80°C, the flexural strength was 8,300 psi and the flexural modulus 460,000 psi.

EXAMPLE 7

A terpolymer was made by suspension polymerization according to the following recipe. Amounts are in weight parts per 100 parts of total monomers

| PHM | Components |
|---|---|
| 200 | $H_2O$ |
| 0.6 | 2,2'-azobis(2,4-dimethylvaleronitrile) |
| 0.2 | hydroxylethylcellulose (suspending agent) |
| 20 | Acrylonitrile |
| 20 | Methyl Methacrylate |
| 60 | Indene |

200 parts by weight of distilled water, 0.2 parts of HEC (which had been dissolved in part of the water), 0.2 parts of 2,2'-azobis(2,4-dimethylvaleronitrile), 20 parts of Acrylonitrile, 2 parts of methyl methacrylate, and 60 parts of indene were charged into reactor provided with a stirrer. The reactor was purged with nitrogen, and was kept under nitrogen pressure, The temperature of the reactor was held for 5 minutes at 68°C with stirring; then a monomer mixture comprising 0.4 parts of 2,2'-azobis(2,4-dimethylvaleronitrile) and 18 parts of methyl methacrylate was added continually into the reactor over a period of about 10 hours through a syringe pump. The resulting mixture was further allowed to react for 6 more hours. After

completion of the reaction, the polymer obtained was dissolved into acetone, and reprecipitated in excess methanol. The polymer was filtered, and dried in a vacuum oven for 24 hours at 60°C. A powdery terpolymer was obtained in a 34.0% yield. The composition of the polymer was 26.6 acrylonitrile, 19.6 methyl methacrylate and 53.8 indene as determined by $C^{13}$ NMR and nitrogen analysis.

25 parts by weight of the terpolymer was mixed with 75 parts of injection grade PVC and 3 parts Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT and other physical properties.

The HDT was 79°C, the flexural strength was 9,100 psi and the flexural modulus 490,000 psi.

## EXAMPLE 8

A terpolymer was made by emulsion polymerization according to the following recipe. Amounts are in weight parts per 100 parts of total monomers.

| PHM | Components |
|---|---|
| 300 | $H_2O$ |
| 5.0 | Siponate DS-10 |
| 0.4 | $Na_2S_2O_8$ |
| 32 | Acrylonitrile |
| 34 | α-Methylstyrene |
| 34 | Indene |

300 parts by weight of distilled water, 5.0 Siponate DS-10, 32 parts acrylonitrile, 10 parts of α-methylstyrene, 34 parts of indene and 0.4 parts of $Na_2S_2O_8$ were charged into a reactor provided with a stirrer. The reactor was purged with nitrogen, and was kept under nitrogen pressure. The temperature of the reactor was held at 65°C for 1 hour with stirring; then a monomer comprising 24 parts of α-methylstyrene was continuously added into the reactor over a period of 12 hours through a syringe pump.

The resulting mixture was allowed to react for 4.0 hours more after the additions. After completion of the reaction, the polymer was recovered through freeze coagulation of the latex. The polymer was filtered, and was then stirred with excess methanol overnight to remove residual monomers. The polymer was filtered again and dried in a vacuum over for 24 hours at 60°C. A powdery terpolymer was obtained in a 23.0 percent yield. Its composition in wt. percent, as determined by N analysis and $C^{13}$NMR, was 33.6 acrylonitrile, 38.4 α-methylstyrene and 28.0 indene, all in weight percent.

25 parts by weight of the terpolymer was mixed with 75 parts of injection grade PVC and 3 parts of Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT, tensile strength and other physical properties, as noted below:

The HDT of the blend was 74.5°C, the tensile strength was 9,200 psi, the flexural strength was 107,800 psi and the flexural modulus 470,000 psi.

## EXAMPLE 9

A terpolymer was made by suspension polymerization according to the following recipe. Amounts are in weight parts per 100 parts of total monomers.

| PHM | Components |
|---|---|
| 200 | $H_2O$ |
| 0.6 | 2,2'-azobis(2,4-dimethylvaleronitrile) |
| 0.2 | hydroxylethylcellulose (suspending agent) |
| 32 | Acrylonitrile |
| 24 | α-Methylstyrene |
| 44 | Indene |

200 parts by weight of distilled water, 0.2 parts of HEC (which has been dissolved in water), 0.2 parts of 2,2'-azobis(2,4-dimethylvaleronitrile), 32 parts

acrylonitrile and 44 parts of indene were charged into a reactor provided with a stirrer. The reactor was purged with nitrogen, and was kept under nitrogen pressure. The temperature of the reactor was held for 5 minutes at 65°C with stirring; then a monomer comprising 0.4 parts of 2,2'-azobis(2,4-dimethyl-valeronitrile) and 24 parts of α-methylstyrene was added continually into the reactor over a period of 12 hours through a syringe pump. The resulting mixture was allowed to react for 4 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 46.0% yield. Its composition in wt. percent of the polymer was 32 acrylonitrile, 14 α-methylstyrene and 54 indene as determined by N analysis and $C^{13}$ NMR.

25 parts by weight of the terpolymer was mixed with 75 parts of injection grade PVC and 3 parts of Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT, tensile strength and other physical properties, as noted below:

The HDT of the blend was 75.0°C, the tensile strength was 9,900 psi, the flexural strength was 10,600 psi and the flexural modulus 480,000 psi.

## EXAMPLE 10

A terpolymer was made by suspension polymerization according to the following recipe. Amounts are in weight parts per 100 parts of total monomers.

| PHM | Components |
|---|---|
| 200 | $H_2O$ |
| 0.6 | 2,2'-azobis(2,4-dimethylvaleronitrile) |
| 0.2 | hydroxylethylcellulose (suspending agent) |
| 32 | Acrylonitrile |
| 14 | α-Methylstyrene |
| 54 | Indene |

200 parts by weight of distilled water, 0.2 parts of HEC (which has been dissolved in water), 0.2 parts of 2,2'-azobis(2,4-dimethylvaleronitrile), 32 parts acrylonitrile and 54 parts of indene were charged into a reactor provided with a stirrer. The reactor was purged with nitrogen, and was kept under nitrogen pressure. The temperature of the reactor was held for 5 minutes at 65°C with stirring; then a monomer comprising 0.4 parts of 2,2'-azobis(2,4-dimethyl-valeronitrile) and 14 parts of α-methylstyrene was added continually into the reactor over a period of 12 hours through a syringe pump. The resulting mixture was allowed to react for 4 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 50% yield. Its composition in wt. percent was 32 acrylonitrile, 22.0 α-methylstyrene and 46 indene as determined by N analysis and $C^{13}$ NMR.

25 parts by weight of the terpolymer was mixed with 75 parts of injection grade PVC and 3 parts of Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT, tensile strength and other physical properties, as noted below:

The HDT of the blend was 77.0°C, the tensile strength was 9,900 psi, the flexural strength was 10,600 psi and the flexural modulus 480,000 psi.

## EXAMPLE 11

A terpolymer was made by emulsion polymerization according to the following recipe. Amounts are in weight parts per 100 parts of total monomers.

| PHM | Components |
|---|---|
| 300 | $H_2O$ |
| 4.0 | Siponate DS-10 |
| 0.4 | $Na_2S_2O_8$ |
| 32 | Acrylonitrile |
| 14 | α-Methylstyrene |
| 54 | Indene |

300 parts by weight of distilled water, 4.0 Siponate DS-10, 32 parts acrylonitrile, 10 parts of α-methylstyrene, 54 parts of indene and 0.2 parts of $Na_2S_2O_8$ were charged into a reactor provided with a stirrer. The reactor was purged with nitrogen, and was kept under nitrogen pressure. The temperature of the reactor was held at 65oC for 1 hour with stirring; then a monomer comprising 4 parts of α-methylstyrene was continuously added into the reactor over a period of 12 hours through a syringe pump. At the third hour an additional 0.2 parts of $Na_2S_2O_8$ was added into the reactor. The resulting mixture was allowed to react for 4.0 hours more after the continuous additions. After completion of the reaction, the polymer was recovered through freeze coagulation of the latex. The polymer was filtered and was then stirred with excess methanol overnight to remove residual monomers. The polymer was filtered again and dried in a vacuum over for 24 hours at 60$^{o}$C. A powdery terpolymer was obtained in a 46 percent yield. Its composition in wt. percent, as determined by N analysis and $C^{13}$NMR was 33 acrylonitrile, 4 α-methylstyrene and 63 indene, all in weight percent.

25 parts by weight of the terpolymer was mixed with 75 parts of injection grade PVC and 3 parts of Thermolite 813 by a blender. The mixture was kneaded for 5 minutes with a mixing brabender having a surface temperature of 190$^{o}$C. The resulting blend was press formed at 190$^{o}$C into a sheet, then a plaque. Each resin plaque thus prepared was tested for HDT and other physical properties, as noted below:

The HDT of the blend was 74.5$^{o}$C, the flexural strength was 11,400 psi and the flexural modulus 490,000 psi.

EXAMPLE 12

A terpolymer was made by suspension polymerization according to the following recipe. Amounts are in weight parts per 100 parts of total monomers.

| PHM | Components |
|---|---|
| 150 | $H_2O$ |
| 0.6 | 2,2'-azobis(2,4-dimethylvaleronitrile) |
| 0.2 | hydroxylethylcellulose (suspending agent) |
| 32 | Acrylonitrile |
| 34 | Indene |
| 34 | Styrene |

150 parts by weight of distilled water, 0.2 parts of HEC (which has been dissolved in water), 0.2 parts of 2,2'-azobis(2,4-dimethylvaleronitrile), 32 parts acrylonitrile, and 34 parts of indene were charged into a reactor provided with a stirrer. The reactor was purged with nitrogen, and was kept under nitrogen pressure. The temperature of the reactor was held for 5 minutes at 65°C with stirring; then a monomer comprising 0.4 parts of 2,2'-azobis(2,4-dimethyl-valeronitrile) and 34 parts of styrene was added continually into the reactor over a period of 12 hours through a syringe pump. The resulting mixture was allowed to react for 4 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 54.5% yield. Its composition in wt. percent was 33 acrylonitrile, 28 styrene and 39 indene as determined by N analysis and $C^{13}$ NMR.

25 parts by weight of the terpolymer was mixed with 75 parts of injection grade PVC and 3 parts of Thermolite 813 by a blender. The mixture was kneaded for 5 minutes with a mixing brabender having a surface temperature of 190oC. The resulting blend was press formed at 190oC into a sheet, then a plaque. Each resin plaque thus prepared was

tested for HDT, tensile strength and other physical properties, as noted below:

The HDT of the blend was 75.0oC, the melt index as 2.279/10 min., the tensile strength was 6,350 psi, the flexural strength was 10,600 psi and the flexural modulus 460,000 psi.

## EXAMPLE 13

A terpolymer was made by suspension polymerization according to the following recipe. Amounts are in weight parts per 100 parts of total monomers.

| PHM | Components |
|---|---|
| 150 | $H_2O$ |
| 0.6 | 2,2'-azobis(2,4-dimethylvaleronitrile) |
| 0.2 | hydroxylethylcellulose (suspending agent) |
| 30 | Acrylonitrile |
| 60 | Indene |
| 10 | Styrene |

150 parts by weight of distilled water, 0.2 parts of HEC (which has been dissolved in water), 0.2 parts of 2,2'-azobis(2,4-dimethylvaleronitrile), 30 parts acrylonitrile, and 58 parts of indene were charged into a reactor provided with a stirrer. The reactor was purged with nitrogen, and was kept under nitrogen pressure. The temperature of the reactor was held for 5 minutes at 65°C with stirring; then a monomer comprising 0.4 parts of 2,2'-azobis(2,4-dimethyl-valeronitrile), 10 parts of styrene and 2 parts of indene was added continually into the reactor over a period of 12 hours through a syringe pump. The resulting mixture was allowed to react for 4 more hours. After completion of the reaction, the polymer obtained was dissolved into acetone, and reprecipitated in excess methanol. The polymer was filtered, and dried in a vacuum oven for 24 hours at 60°C. A powdery terpolymer was obtained in a 51.5% yield. Its composition in wt. percent was 31 acrylonitrile, 15 styrene and 54 indene as determined

by N analysis and $C^{13}$ NMR.

25 parts by weight of the terpolymer was mixed with 75 parts of injection grade PVC and 3 parts of Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT, tensile strength and other physical properties, as noted below:

The HDT of the blend was 73.5°C, the melt index as 2.934/10 min., the tensile strength was 9,320 psi, the flexural strength was 9,000 psi and the flexural modulus 460,000 psi.

EXAMPLE 14

A terpolymer was made by emulsion polymerization using the following recipe. Amounts are in weight parts per 100 parts of total monomers.

| | |
|---|---|
| Water | 200 |
| Sodium Lauryl Sulfate | 2.5 |
| Sodium Phosphate 12 $H_2O$ | 1.0 |
| Methyl Methacrylate | 80 |
| Indene | 15 |
| Acrylonitrile | 5 |
| Sodium Persulfate | 0.5 |

The reactor was charged with the ingredients listed above, purged with nitrogen and sealed. The reactor was then mechanially agitated and heated to 60°C and held at 60°C for 16 hours. The polymer was recovered by freeze coagulation followed by washing with methanol and drying. The yield of the polymer was 90%. The composition of the polymer was 3% acrylonitrile, 83% methyl methacrylate and 14% indene as determined by $C^{13}$ NMR.

25 parts by weight of the terpolymer was mixed with 75 parts of injection grade PVC and 3 parts of Thermolite 813 by a blender. The mixture was kneaded for 5 minutes with a mixing brabender having a surface temperature of 190°C. The resulting

blend was press formed at 190°C into a sheet, then a plaque. Each resin plaque thus prepared was tested for HDT, tensile strength and other physical properties, as noted below:

The HDT of the blend was 75.5°C, the tensile strength was 9,860 psi, the flexural strength was 14,420 psi and the flexural modulus 406,000 psi, and the melt index was 0.824 gram/10 min. (at 175°C).

EXAMPLE 15

A terpolyumer was made by emulsion polymerization using the following recipe. Amounts are in weight parts per 100 parts of total monomers.

| | |
|---|---|
| Water | 200 |
| Sodium Lauryl Sulfate | 2.5 |
| Sodium Phosphate 12 $H_2O$ | 1.0 |
| Styrene | 70 |
| Indene | 10 |
| Acrylonitrile | 20 |
| Sodium Persulfate | 0.5 |

The reactor was charged with the ingredients listed above, purged with nitrogen and sealed. The reactor was then mechanially agitated and heated to 60°C and held at 60°C for 16 hours. The polymer was recovered by freeze coagulation followed by washing with methanol and drying. The yield of the polymer was 88%. The composition was 44% styrene, 44% indene and 12% acrylonitrile, according to $C^{13}$ NMR analysis.

25 parts by weight of the terpolymer was mixed with 75 parts of injection grade PVC and 3 parts of Thermolite 813 by a blender. The mixture was kneaded for 5 minutes with a mixing brabender having a surface temperature of 190°C. The resulting blend was press formed at 190°C into a sheet, then a plaque. Each resin plaque thus prepared was tested for HDT, tensile strength and other physical properties, as noted below:

The HDT of the blend was 77°C, the tensile strength was 9,230 psi, the flexural strength was 13,590 psi and the flexural modulus 384,000 psi, and the melt index was 1.634 gram/10 min. (at 175°C).

In the compositions used to blend with vinyl chloride polymers, when more than one "third monomer" is chosen, the polymer is not technically a "terpolymer" but the term is used herein and in the claims for convenience.

As will be evident to those skilled in the art, various modifications of this invention can be made or followed in the light of the foregoing disclosure and discussion without departing from the spirit and scope of the disclosure or from the scope of the claims.

CLAIMS:

1. A composition comprising an addition terpolymer containing acrylonitrile, indene and a third monomer selected from methyl methacrylate or at least one monomer of the group α-methylstyrene and vinyl aromatics of the formula:

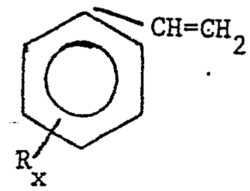

where each R is independently selected from Cl, H and a $C_1$ to $C_9$ alkyl group and x = 1 or 2, combined in the polymer structure such that

(1) when the third monomer is methyl methacrylate, the polymer contains in weight percent 2-35 acrylonitrile, 10-67 indene, 5-85 methyl methacrylate, and the moles of acrylonitrile plus methyl methacrylate are equal to or more than the moles of indene,

(2) when the third monomer is one of both of α-methylstyrene and said vinyl aromatics, the polymer contains in weight percent 10-40 acrylonitrile, 26-67 indene and 4-50 of said third monomer, and the moles of acrylonitrile plus said vinyl aromatics is equal to or greater than the moles of α-methylstyrene plus indene.

2. A composition comprising a normally solid, addition terpolymer containing acrylonitrile, indene and a third monomer selected from methyl methacrylate or one or both of styrene and α-methylstyrene, combined in the polymer structure such that, (1) when the third monomer is methyl methacrylate, the polymer contains in weight percent 2-35 acrylonitrile, 10-67 indene, 5-85 methyl methacrylate, and the moles of acrylonitrile plus methyl methacrylate are equal to or more than the moles of indene, (2) when the third is one or both of α-methylstyrene and styrene, the polymer contains in weight percent 10-40 acrylonitrile, 26-67

indene, 4-50 of the third monomer α-methylstyrene and/or styrene, and the moles of acrylonitrile plus styrene is equal to or greater than the moles of α-methylstyrene plus indene.

3. A composition of claim 2 wherein said third monomer is methyl methacrylate.

4. A composition of claim 2 wherein said third monomer is one or both of α-methylstyrene.

5. A composition of claim 2 wherein said third monomer is α-methylstyrene.

6. A composition of claim 2 wherein said third monomer is styrene.

7. A composition of claim 1 wherein the vinyl aromatics of said formula are chosen from styrene, o-chlorostyrene, p-chlorostyrene, o-ethylstyrene, p-ethylstyrene, o-*tert.*-butylstyrene, p-*tert.*-butylstyrene, o-methylstyrene, m-ethylstyrene, p-methylstyrene, m-*tert.*-butylstyrene, m-ethylstyrene and o,p-dichlorostyrene.